# FASCICULE DE BREVET EUROPEEN

(11) **EP 4 180 322 B1**
(45) Date de publication et mention de la délivrance du brevet: **30.04.2025**
(21) Numéro de dépôt: 22206652.4
(22) Date de dépôt: 10.11.2022
(51) Int. Cl.: B64C 1/18

(54) **AÉRONEF COMPORTANT UN PLANCHER COMPRENANT AU MOINS UNE PARTIE DE PLANCHER MOBILE ARTICULÉE**
FLUGZEUG MIT BODEN UMFASSEND MINDESTENS EINEM GELENKIGEN BEWEGLICHEN BODENTEIL
AIRCRAFT INCLUDING A FLOOR COMPRISING AT LEAST ONE ARTICULATED MOVABLE FLOOR PART

(30) Priorité: 15.11.2021 FR 2112057
(43) Date de publication de la demande: 17.05.2023
(73) Titulaire: AIRBUS OPERATIONS (S.A.S.), 31060 Toulouse (FR)
(72) Inventeur: ORTEU, Benoit, 31060 TOULOUSE (FR); MIL, Ludovic, 31060 TOULOUSE (FR); LAGANIER, Lionel, 31060 TOULOUSE (FR); MARTY, Dominique, 31060 TOULOUSE (FR); ROBERT, Philippe, 31060 TOULOUSE (FR)
(74) Mandataire: Fantin, Laurent

(56) Documents cités:
- WO-A1-2018/104403
- FR-A1- 2 960 514
- US-A1- 2014 175 226
- US-A1- 2019 256 187

## Description

La présente demande se rapporte à un plancher d'aéronef comprenant au moins une partie de plancher mobile articulée ainsi qu'à un aéronef équipé dudit plancher.

Selon un mode de réalisation, un aéronef comprend un fuselage, des ailes ainsi qu'un caisson central de voilure positionné en partie inférieure du fuselage et reliant les ailes au fuselage. L'aéronef comprend également un plancher positionné au-dessus du caisson central de voilure séparant le fuselage en une zone supérieure positionnée au-dessus du plancher et une zone inférieure positionnée au-dessous du plancher. Le plancher comprend plusieurs traverses orientées perpendiculairement à une direction longitudinale, des panneaux rapportés sur ces traverses ainsi que des rails parallèles entre eux, orientés selon la direction longitudinale et rapportés sur les traverses. Lorsque la zone supérieure est aménagée en cabine de passagers, certains panneaux du plancher situés entre les rails sont amovibles pour accéder depuis la zone supérieure à la zone inférieure. Les rails d'une cabine de passagers étant suffisamment espacés, les ouvertures dégagées par les panneaux amovibles entre les rails sont suffisantes pour offrir une bonne accessibilité à la zone inférieure.

Lorsque la zone supérieure est aménagée en soute pour des conteneurs, les rails situés sur le plancher sont très rapprochés, si bien que les ouvertures entre les rails ne permettent pas d'accéder aisément à la zone inférieure. Sans ces ouvertures, les parties situées sous le plancher de part et d'autre du caisson central de voilure sont inaccessibles ou difficiles d'accès depuis les zones situées sous le plancher à l'avant et à l'arrière du caisson central de voilure.

FR 2 960 514 A1 divulgue un aéronef comportant un plancher comprenant au moins une partie de plancher fixe ainsi qu'au moins une partie de plancher mobile; l'aéronef comprenant une structure porteuse supportant le plancher; le plancher comprenant au moins une articulation reliant la partie de plancher mobile ainsi que la partie de plancher fixe.

La présente invention vise à remédier à tout ou partie des inconvénients de l'art antérieur. A cet effet, l'invention a pour objet un aéronef selon la revendication 1.

Le fait de prévoir une portion de rail au niveau de la partie de plancher mobile permet d'obtenir une partie de plancher mobile large selon une direction transversale, facilitant l'accès à la zone située sous le plancher. L'articulation 52 permet de manipuler aisément cette partie de plancher mobile. Ainsi, il est possible d'accéder sous le plancher, de part et d'autre du caisson central de voilure, pour réaliser des opérations lors de l'assemblage de l'aéronef, pour installer des équipements ou pour la maintenance lors de l'exploitation de l'aéronef.

Selon une autre caractéristique, chaque liaison pivotante comprend :
au moins une éclisse, reliant les première et deuxième portions de traverse, qui présente une première extrémité plaquée contre la première portion de traverse ainsi qu'une deuxième extrémité plaquée contre la deuxième portion de traverse,
un axe de pivotement, confondu avec l'axe de pivotement de l'articulation, qui traverse la première portion de traverse et la première extrémité de l'éclisse,
au moins une liaison complète qui relie la deuxième portion de traverse et la deuxième extrémité de l'éclisse.

Selon une autre caractéristique, chaque liaison pivotante comprend deux éclisses disposées de part et d'autre des première et deuxième portions de traverse.

Selon une autre caractéristique, chacune des première et deuxième portions de traverse présente une âme, chaque éclisse étant plaquée contre une face de l'âme de chacune des première et deuxième portions de traverse.

Selon une autre caractéristique, la première portion de traverse est solidaire de la partie de plancher fixe, la deuxième portion de traverse étant solidaire de la partie de plancher mobile. Selon une autre caractéristique, chaque traverse sécante avec le bord longitudinal de la partie de plancher mobile, au niveau duquel est positionné l'axe de pivotement, comprend un plan de coupe, positionné approximativement au niveau du bord longitudinal, scindant la traverse en des première et deuxième portions de traverse reliées par une liaison pivotante.

Selon une autre caractéristique, la partie de plancher mobile est délimitée par des premier et deuxième bords longitudinaux parallèles à la direction longitudinale ainsi que par des premier et deuxième bords transversaux avant et arrière perpendiculaires à la direction longitudinale, le bord transversal avant étant faiblement espacé et légèrement décalé vers l'avant par rapport à une première traverse, le bord transversal arrière étant faiblement espacé et légèrement décalé vers l'arrière par rapport à une deuxième traverse.

Selon une autre caractéristique, le plancher comprend des premier et deuxième bords latéraux droit et gauche ainsi que des première et deuxième parties de plancher mobiles, la première partie de plancher mobile comportant un bord longitudinal gauche positionné au niveau du bord latéral gauche du plancher et un bord longitudinal droit faiblement espacé et légèrement décalé vers la gauche par rapport à un premier rail, la deuxième partie de plancher mobile comportant un bord longitudinal droit positionné au niveau du bord latéral droit du plancher et un bord longitudinal gauche faiblement espacé et légèrement décalé vers la droite par rapport à un deuxième rail.

Selon une autre caractéristique, l'aéronef comprenant un caisson central de voilure et une case de train d'atterrissage principale, la partie de plancher mobile est positionnée au-dessus du caisson central de voilure et/ou de la case de train d'atterrissage principale.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une coupe longitudinale d'une partie du fuselage de l'aéronef visible sur la figure 1,
- La figure 3 est une vue en perspective des traverses et des rails d'un plancher d'une soute d'aéronef illustrant un mode de réalisation de l'invention,
- La figure 4 est une vue en perspective d'une zone latérale du plancher visible sur la figure 3,
- La figure 5 est une vue de face d'une zone latérale du plancher visible sur la figure 3,
- La figure 6 est une vue en perspective d'une articulation d'une partie de plancher mobile intégrée dans un plancher d'une soute d'un aéronef illustrant un mode de réalisation de l'invention, et
- La figure 7 est une vue en perspective d'une articulation entre deux portions d'une traverse d'un plancher d'une soute d'un aéronef illustrant un mode de réalisation de l'invention.

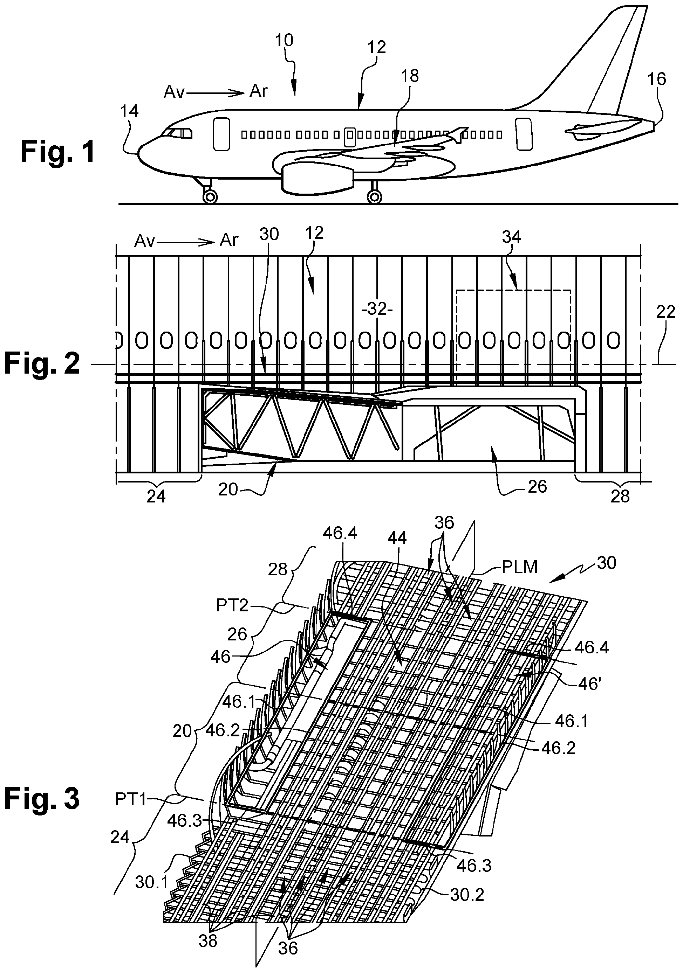

Comme illustré sur la figure 1, un aéronef 10 comprend un fuselage 12 qui s'étend entre une pointe avant 14 et un cône arrière 16, ainsi que des ailes 18 disposées de part et d'autre du fuselage 12 et reliées à ce dernier par un caisson central de voilure 20.

Pour la suite de la description, un axe longitudinal 22 de l'aéronef 10 correspond à l'axe horizontal (lorsque l'aéronef 10 est au sol) qui s'étend de la pointe avant 14 au cône arrière 16 de l'aéronef 10. Une direction longitudinale est une direction parallèle à l'axe longitudinal 22. Un plan longitudinal est un plan comprenant un axe qui est parallèle à l'axe longitudinal 22. Un plan longitudinal médian PLM est un plan longitudinal, vertical et passant par l'axe longitudinal 22. Un plan transversal est un plan perpendiculaire à l'axe longitudinal 22.

Les notions avant (Av) et arrière (Ar) font référence au sens d'écoulement de l'air à l'extérieur de l'aéronef en vol, qui va de l'avant vers l'arrière.

Comme illustré sur les figures 2 et 3, le fuselage 12 comprend également au moins un tronçon de fuselage avant 24 situé à l'avant du caisson central de voilure 20, une case de train d'atterrissage principale 26 décalée vers l'arrière par rapport au caisson central de voilure 20, au moins un tronçon de fuselage arrière 28 situé à l'arrière de la case de train d'atterrissage principale 26 ainsi qu'un plancher 30, positionné au-dessus du caisson central de voilure 20, qui s'étend depuis le tronçon de fuselage avant 24 jusqu'au tronçon de fuselage arrière 28.

Selon une application, le plancher 30 sépare le fuselage en une zone supérieure située au-dessus du plancher 30 et une zone inférieure située au-dessous du plancher 30. La zone supérieure située au-dessus du plancher 30 forme une soute 32 dans laquelle peut être stocké au moins un conteneur 34 (représenté en pointillés sur la figure 2). Le plancher 30 présente des premier et deuxième bords latéraux 30.1, 30.1 accolés au fuselage 12, symétriques par rapport au plan longitudinal médian PLM.

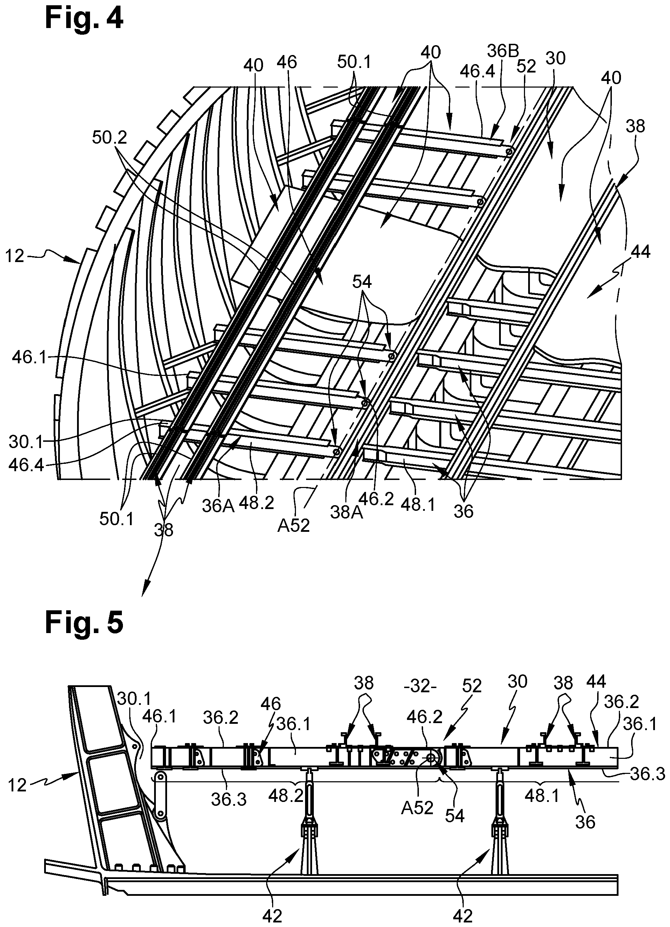

Selon un mode de réalisation, le plancher 30 comprend plusieurs traverses 36 parallèles entre elles et perpendiculaire à la direction longitudinale ainsi que plusieurs rails 38 rapportés sur les traverses 36, parallèles entre eux et à la direction longitudinale. Le plancher 30 comprend des panneaux 40 (partiellement visibles sur la figure 4) positionnés entre les rails 38 et configurés pour obturer les espaces entre les rails 38. Ces panneaux 40 reposent sur les traverses 36 et/ou les rails 38 et y sont fixés.

Le fuselage 12 comprend une structure porteuse 42, comme des longerons ou des chandelles par exemple, supportant le plancher 30.

Selon une configuration, le plancher 30 comprend au moins une partie de plancher fixe 44 ainsi qu'au moins une partie de plancher mobile 46 par rapport à la partie de plancher fixe 44, configurée pour faire communiquer la soute 32 avec la zone inférieure située sous le plancher 30. Au droit des parties de plancher fixes 44, les traverses 36 du plancher 30 sont fixées à la structure porteuse 42 du fuselage 12. Au droit de chaque partie de plancher mobile 46, les traverses 36 du plancher 30 reposent sur la structure porteuse 42 mais ne sont pas fixées à cette dernière.

Chaque partie de plancher mobile 46, approximativement rectangulaire, est délimitée par des premier et deuxième bords longitudinaux 46.1, 46.2 parallèles à la direction longitudinale ainsi que par des premier et deuxième bords transversaux avant et arrière 46.3, 46.4 perpendiculaires à la direction longitudinale.

Selon un agencement, le plancher 30 comprend plusieurs parties de plancher mobiles 46, 46' jouxtant les premiers et deuxième bords latéraux 30.1, 30.2 du plancher 30 ; pour chacune des parties de plancher mobiles 46, un de ses bords longitudinaux 46.1, 46.2 étant superposé ou confondu avec l'un des bords latéraux 30.1, 30.2 du plancher 30. Les parties de plancher mobiles 46, 46' sont agencées de manière symétrique par rapport au plan longitudinal médian PLM.

Le plancher 30 comprend au moins une partie de plancher mobile 46 recouvrant une zone située au-dessus du caisson central de voilure 20 et/ou de la case de train d'atterrissage principale 26. Selon une configuration, le plancher 30 comprend, au niveau de chacun de ses bords latéraux 30.1, 30.2, une unique partie de plancher mobile 46, son bord transversal avant 46.3 étant situé à l'aplomb d'un premier plan transversal PT1 qui sépare le tronçon de fuselage avant 24 et le caisson central de voilure 20, son bord transversal arrière 46.4 étant situé à l'aplomb d'un deuxième plan transversal PT2 qui sépare le tronçon de fuselage arrière 28 et la case de train d'atterrissage principale 26. Selon une autre configuration, le plancher 30 comprend, au niveau de chacun de ses bords latéraux 30.1, 30.2, plusieurs parties de plancher mobiles 46, juxtaposées selon la direction longitudinale, qui s'étendent du premier plan transversal PT1 jusqu'au deuxième plan transversal PT2.

Selon un agencement, au moins une partie de plancher mobile 46 comprend un bord longitudinal gauche 46.1 positionné au niveau du bord latéral gauche 30.1 du plancher 30, un bord longitudinal droit 46.2 faiblement espacé et légèrement décalé vers la gauche par rapport à un rail 38A, un bord transversal avant 46.3 faiblement espacé et légèrement décalé vers l'avant par rapport à une première traverse 36A ainsi qu'un bord transversal arrière 46.4 faiblement espacé et légèrement décalé vers l'arrière par rapport à une deuxième traverse 36B.

Au moins une partie de plancher mobile 46' comprend un bord longitudinal droit 46.2 positionné au niveau du bord latéral droit 30.2 du plancher 30, un bord longitudinal gauche 46.1 faiblement espacé et légèrement décalé vers la gauche par rapport à un rail 38, un bord transversal avant 46.3 faiblement espacé et légèrement décalé vers l'avant par rapport à une première traverse 36A ainsi qu'un bord transversal arrière 46.4 faiblement espacé et légèrement décalé vers l'arrière par rapport à une deuxième traverse 36B.

Pour donner un ordre de grandeur, chaque partie de plancher mobile 46 a une largeur (dimension prise selon une direction transversale) supérieure à 70 cm, de l'ordre de 1 m, et une longueur (dimension prise selon la direction longitudinale) supérieure à 1 m.

Selon un mode de réalisation, chaque traverse 36 s'étend du premier bord latéral 30.1 jusqu'au deuxième bord latéral 30.2. Selon une configuration, chaque traverse 36 présente une section en I comportant une âme 36.1 et deux semelles 36.2, 36.3 positionnées à chacune des extrémités de l'âme 36.1.

Chaque rail 38 présente un profilé sensiblement constant sur toute sa longueur. Chaque rail s'étend du tronçon de fuselage avant 24 jusqu'au tronçon de fuselage arrière 28. A titre d'exemple, le rail 38 peut avoir une section transversale en I, en T, en L inversé, en C ou autre. Bien entendu, l'invention n'est pas limitée à ces sections pour les traverses 36 et les rails 38. Quel que soit le mode de réalisation, plusieurs traverses 36 s'étendent sur au moins une partie de plancher fixe 44 ainsi que sur au moins une partie de plancher mobile 46 et comprennent une première portion de traverse 48.1 solidaire d'un premier élément parmi la partie fixe 44 et la partie de plancher mobile 46 ainsi qu'une deuxième portion de traverse 48.2 solidaire d'un deuxième élément, parmi la partie de plancher fixe 44 et la partie de plancher mobile 46, différent du premier élément. Les première et deuxième portions de traverse 48.1, 48.2 sont alignées, positionnées bout-à-bout et séparées au niveau d'un plan de coupe positionné approximativement au droit d'un des bords longitudinaux 46.1, 46.2 de la partie de plancher mobile 46. En fonction du nombre de parties de plancher mobiles 46, certaines traverses peuvent comprendre deux ou trois portions de traverse.

Selon une configuration, la première portion de traverse 48.1 est solidaire de la partie de plancher fixe 44, la deuxième portion de traverse 48.2 étant solidaire de la partie de plancher mobile 46.

Les plans de coupe des traverses 36, positionnés approximativement au droit d'un même bord longitudinal 46.1, 46.2 d'une partie de plancher mobile 46, sont sensiblement coplanaires.

Selon un agencement, lorsque le plancher 30 comprend deux parties de plancher mobiles 46 positionnées de part et d'autre d'une partie de plancher fixe 44, certaines traverses 36 comprennent chacune une première portion de traverse 48.1 centrale et solidaire de la partie de plancher fixe 44 ainsi que des deuxième et troisième portions de traverse 48.2 positionnées dans le prolongement de chaque extrémité de la première portion de traverse 48.1 et solidaires des parties de plancher mobiles 46.

Au moins un rail 38 s'étend sur au moins une partie de plancher fixe 44 ainsi qu'au moins une partie de plancher mobile 46 et comprend une première portion de rail 50.1 solidaire de la partie de plancher fixe 44 ainsi qu'une deuxième portion de rail 50.2 solidaire de la partie de plancher mobile 46, les première et deuxième portions de rail 50.1, 50.2 étant alignées, positionnées bout-à-bout et séparées au niveau d'un plan de coupe positionné approximativement au droit d'un des bords transversaux 46.3, 46.4 de la partie de plancher mobile 46. Selon une configuration, certains rails 38 positionnés au niveau d'une partie de plancher mobile 46 comprennent chacun une première portion de rail 50.1 solidaire de la partie de plancher mobile 46 ainsi que des deuxième et troisième portions de rail 50.2, 50.3 positionnées dans le prolongement de chaque extrémité de la première portion de rail 50.1 et solidaires de la partie de plancher fixe 44 du plancher 30. Bien entendu, l'invention n'est pas limitée à cette configuration.

Selon une particularité, le plancher 30 comprend au moins une articulation 52 reliant au moins une partie de plancher mobile 46 et la partie de plancher fixe 44. Cette articulation 52 présente un axe de pivotement A52 parallèle à la direction longitudinale et positionné approximativement au droit des plans de coupe des traverses 36.

Selon un agencement, chaque partie de plancher mobile 46 est reliée à la partie de plancher fixe 44 par une articulation 52.

Pour au moins deux traverses 36 présentant des plans de coupe positionnés approximativement au droit d'un bord longitudinal 46.1, 46.2, l'articulation 52 comprend une liaison pivotante 54, une pour chacune des deux traverses 36, reliant les deux portions de traverse 48.1, 48.2 positionnées de part et d'autre du plan de coupe.

Selon une configuration, chaque traverse 36 sécante avec l'un des bords longitudinaux 46.1, 46.2 de la partie de plancher mobile 46 comprend un plan de coupe positionné approximativement au niveau du bord longitudinal 46.1, 46.2 scindant la traverse 36 en des première et deuxième portions de traverse 48.1, 48.2 reliées par une liaison pivotante 54 qui présente un axe de pivotement confondu avec l'axe de pivotement A52 de l'articulation 52.

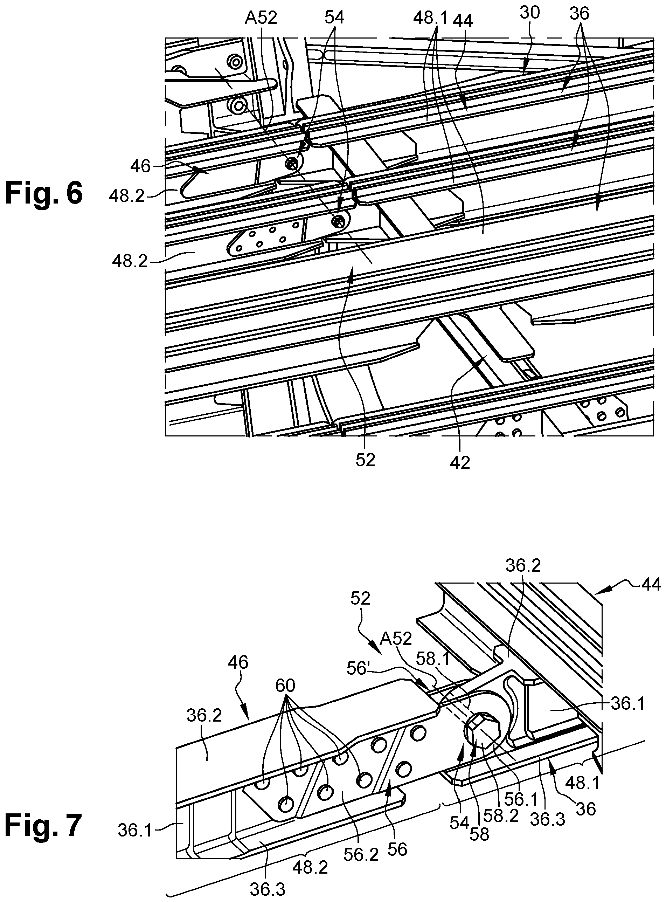

Selon un mode de réalisation visible en détail sur la figure 7, chaque liaison pivotante 54 comprend :
- au moins une éclisse 56, reliant les première et deuxième portions de traverse 48.1, 48.2, qui présente une première extrémité 56.1 plaquée contre une première face de l'âme 36.1 de la première portion de traverse 48.1 ainsi qu'une deuxième extrémité 56.2 plaquée contre une première face de l'âme 36.1 de la deuxième portion de traverse 48.2,
- un axe de pivotement 58, confondu avec l'axe de pivotement A52 de l'articulation 52, qui traverse l'âme 36.1 de la première portion de traverse 48.1 et la première extrémité 56.1 de l'éclisse 56,
- au moins une liaison complète 60 qui relie l'âme 36.1 de la deuxième portion de traverse 48.2 et la deuxième extrémité 56.2 de l'éclisse 56.

L'axe de pivotement 58 comprend un cylindre 58.1 ainsi que deux butées 58.2 positionnées à chacune des extrémités du cylindre 58.1, le cylindre 58.1 et les deux butées 58.2 étant configurés de manière à maintenir chaque éclisse 56 plaquée contre l'âme 36.1 de la première portion de traverse 48.1. Selon un mode de réalisation, l'axe de pivotement 58 est un boulon, la vis du boulon correspondant au cylindre et à une des deux butées, l'écrou du boulon correspondant à l'autre butée.

En complément, l'âme 36.1 de la première portion de traverse 48.1 présente un trou traversant configuré pour loger le cylindre 58.1 de l'axe de pivotement 58. En parallèle, la première extrémité 56.1 de chaque éclisse 56 présente un trou traversant configuré pour loger le cylindre 58.1 de l'axe de pivotement 58.

La liaison complète 60 est obtenue par collage, boulonnage, sertissage ou toute autre technique d'assemblage.

Selon un mode de réalisation, chaque liaison pivotante 54 comprend deux éclisses 56, 56' disposées de part et d'autre des âmes 36.1 des première et deuxième portions de traverse 48.1, 48.2.

Selon une configuration, l'axe de pivotement 58 est prévu au niveau de la première portion de traverse 48.1 solidaire de la partie de plancher fixe 44, chaque éclisse étant reliée par une liaison complète 60 à la deuxième portion de traverse 48.2 solidaire de la partie de plancher mobile 46.

Selon une autre configuration, l'axe de pivotement 58 est prévu au niveau de la deuxième portion de traverse 48.2 solidaire de la partie de plancher mobile 46, chaque éclisse étant reliée par une liaison complète 60 à la première portion de traverse 48.1 solidaire de la partie de plancher fixe 44.

Chaque partie de plancher mobile 46 comprend au moins une portion de rail prolongée par au moins une portion de rail solidaire de la partie de plancher fixe 44. Ainsi, chaque partie de plancher mobile 46 a une largeur (dimension prise selon la direction transversale) importante qui facilite l'accès à la zone située sous le plancher 30. L'articulation 52 permet de manipuler aisément la partie de plancher mobile 46 en la faisant pivoter afin de dégager une ouverture qui permet d'accéder à la zone située sous le plancher 30.

Le fait de prévoir une liaison pivotante 54 pour chaque traverse 36 sécante avec l'axe de pivotement A52 permet d'obtenir une liaison résistante entre la partie de plancher mobile 46 et la partie de plancher fixe 44, permettant de résister aux poids des conteneurs 34 positionnés sur le plancher 30.

## Revendications

1. Aéronef comportant un plancher comprenant plusieurs traverses (36) parallèles entre elles et perpendiculaires à une direction longitudinale, plusieurs rails (38) parallèles entre eux et à la direction longitudinale, au moins une partie de plancher fixe (44) ainsi qu'au moins une partie de plancher mobile (46) mobile par rapport la partie de plancher fixe (44), présentant au moins un bord longitudinal (46.1, 46.2) parallèle à la direction longitudinale ; l'aéronef comprenant une structure porteuse (42) supportant le plancher (30) ; l'aéronef étant tel qu'au moins deux desdites traverses (36) comportent chacune une première portion de traverse (48.1) solidaire d'un premier élément parmi la partie de plancher fixe (44) et la partie de plancher mobile (46) ainsi qu'une deuxième portion de traverse (48.2) solidaire d'un deuxième élément, parmi la partie de plancher fixe (44) et la partie de plancher mobile (46), différent du premier élément, les première et deuxième portions de traverse (48.1, 48.2) étant alignées, positionnées bout-à-bout et séparées au niveau d'un plan de coupe positionné approximativement au droit du bord longitudinal (46.1, 46.2), tel qu'au moins un desdits rails (38) comprend au moins une première portion de rail (50.1) solidaire de la partie de plancher mobile (46) et au moins une deuxième portion de rail (50.2) solidaire de la partie de plancher fixe (44) du plancher, prolongeant ladite première portion de rail (50.1), et tel que le plancher comprend au moins une articulation (52) reliant la partie de plancher mobile (46) ainsi que la partie de plancher fixe (44) et présentant un axe de pivotement (A52) parallèle à la direction longitudinale, ladite articulation (52) comprenant, pour au moins lesdites deux traverses, une liaison pivotante (54) qui relie les première et deuxième portions de traverse (48.1, 48.2), les traverses (36) du plancher (30) reposant sur la structure porteuse (42) au droit de chaque partie de plancher mobile (46), les traverses (36) du plancher (30) étant fixées à la structure porteuse (42) au droit de chaque partie de plancher fixe (44).

2. Aéronef selon la revendication précédente, tel que chaque liaison pivotante (54) comprend :
- au moins une éclisse (56), reliant les première et deuxième portions de traverse (48.1, 48.2), qui présente une première extrémité (56.1) plaquée contre la première portion de traverse (48.1) ainsi qu'une deuxième extrémité (56.2) plaquée contre la deuxième portion de traverse (48.2),
- un axe de pivotement (58), confondu avec l'axe de pivotement (A52) de l'articulation (52), qui traverse la première portion de traverse (48.1) et la première extrémité (56.1) de l'éclisse (56),
- au moins une liaison complète (60) qui relie la deuxième portion de traverse (48.2) et la deuxième extrémité (56.2) de l'éclisse (56).

3. Aéronef selon la revendication précédente, tel que chaque liaison pivotante (54) comprend deux éclisses (56, 56') disposées de part et d'autre des première et deuxième portions de traverse (48.1, 48.2).

4. Aéronef selon l'une des revendications 2 à 3, tel que chacune des première et deuxième portions de traverse (48.1, 48.2) présente une âme (36.1) et en ce que chaque éclisse (56, 56') est plaquée contre une face de l'âme (36.1) de chacune des première et deuxième portions de traverse (48.1, 48.2).

5. Aéronef selon l'une des revendications précédentes, tel que la première portion de traverse (48.1) est solidaire de la partie de plancher fixe (44), la deuxième portion de traverse (48.2) étant solidaire de la partie de plancher mobile (46).

6. Aéronef selon l'une des revendications précédentes, tel que chaque traverse (36) sécante avec le bord longitudinal (46.1, 46.2) de la partie de plancher mobile (46) au niveau duquel est positionné l'axe de pivotement (A52), comprend un plan de coupe, positionné approximativement au niveau du bord longitudinal (46.1, 46.2), scindant la traverse (36) en des première et deuxième portions de traverse (48.1, 48.2) reliées par une liaison pivotante (54).

7. Aéronef selon l'une des revendications précédentes, tel que la partie de plancher mobile (46) est délimitée par des premier et deuxième bords longitudinaux (46.1, 46.2) parallèles à la direction longitudinale ainsi que par des premier et deuxième bords transversaux avant et arrière (46.3, 46.4) perpendiculaires à la direction longitudinale, le bord transversal avant (46.3) étant faiblement espacé et légèrement décalé vers l'avant par rapport à une première traverse (36A), le bord transversal arrière (46.4) étant faiblement espacé et légèrement décalé vers l'arrière par rapport à une deuxième traverse (36B).

8. Aéronef selon la revendication précédente, tel que le plancher comprend des premier et deuxième bords latéraux droit et gauche (30.1, 30.2) ainsi que des première et deuxième parties de plancher mobiles (46, 46'), la première partie de plancher mobile (46) comportant un bord longitudinal gauche (46.1) positionné au niveau du bord latéral gauche (30.1) du plancher (30) et un bord longitudinal droit (46.2) faiblement espacé et légèrement décalé vers la gauche par rapport à un premier rail (38A), la deuxième partie de plancher mobile (46') comportant un bord longitudinal droit (46.2) positionné au niveau du bord latéral droit (30.2) du plancher (30) et un bord longitudinal gauche (46.1) faiblement espacé et légèrement décalé vers la droite par rapport à un deuxième rail.

9. Aéronef selon l'une des revendications précédentes, ledit aéronef comportant un caisson central de voilure (20) et une case de train d'atterrissage principale (26), tel que la partie de plancher mobile (46) est positionnée au-dessus du caisson central de voilure (20) et/ou de la case de train d'atterrissage principale (26).

## Patentansprüche

1. Luftfahrzeug mit einem Boden, der mehrere zueinander parallele und zu einer Längsrichtung rechtwinklige Querträger (36), mehrere zueinander und zur Längsrichtung parallele Schienen (38), wenigstens einen festen Bodenteil (44) sowie wenigstens einen beweglichen Bodenteil (46) aufweist, der in Bezug auf den festen Bodenteil (44) beweglich ist und wenigstens eine zur Längsrichtung parallele Längskante (46.1, 46.2) aufweist; wobei das Luftfahrzeug eine Tragestruktur (42) aufweist, die den Boden (30) trägt; wobei das Luftfahrzeug so beschaffen ist, dass wenigstens zwei der Querträger (36) jeweils einen ersten Querträgerabschnitt (48.1), der fest mit einem ersten Element des festen Bodenteils (44) und des beweglichen Bodenteils (46) verbunden ist, sowie einen zweiten Querträgerabschnitt (48.2) aufweisen, der fest mit einem zweiten Element des festen Bodenteils (44) und des beweglichen Bodenteils (46) verbunden ist, das sich von dem ersten Element unterscheidet, wobei der erste und der zweite Querträgerabschnitt (48.1, 48.2) aufeinander ausgerichtet aneinanderstoßend angeordnet und an einer Schnittebene getrennt sind, die ungefähr zur der Längskante (46.1, 46.2) rechtwinklig ist, derart dass wenigstens eine der Schienen (38) wenigstens einen ersten Schienenabschnitt (50.1), der mit dem beweglichen Bodenteil (46) fest verbunden ist, und wenigstens einen zweiten Schienenabschnitt (50.2) aufweist, der mit dem festen Bodenteil (44) des Bodens fest verbunden ist und den ersten Schienenabschnitt (50.1) verlängert, und derart dass der Boden wenigstens ein Gelenk (52) umfasst, das den beweglichen Bodenteil (46) sowie den festen Bodenteil (44) verbindet und eine zur Längsrichtung parallele Schwenkachse (A52) aufweist, wobei das Gelenk (52) für wenigstens die beiden Querträger eine Schwenkverbindung (54) aufweist, die den ersten und den zweiten Querträgerabschnitt (48.1, 48.2) verbindet, wobei die Querträger (36) des Bodens (30) im Bereich des beweglichen Bodenteils (46) jeweils auf der Tragestruktur (42) ruhen und wobei die Querträger (36) des Bodens (30) im Bereich des festen Bodenteil (44) jeweils an der Tragestruktur (42) befestigt sind.

2. Luftfahrzeug nach dem vorhergehenden Anspruch, derart dass jede Schwenkverbindung (54) aufweist:
- wenigstens eine Lasche (56), die den ersten und den zweiten Querträgerabschnitt (48.1, 48.2) verbindet, die ein erstes Ende (56.1), das gegen den ersten Querträgerabschnitt (48.1) angesetzt ist, sowie ein zweites Ende (56.2) aufweist, das gegen den zweiten Querträgerabschnitt (48.2) angesetzt ist,
- eine Schwenkachse (58), die mit der Schwenkachse (A52) des Gelenks (52) zusammenfällt und durch den ersten Querträgerabschnitt (48.1) und das erste Ende (56.1) der Lasche (56) verläuft,
- wenigstens eine vollständige Verbindung (60), die den zweiten Querträgerabschnitt (48.2) und das zweite Ende (56.2) der Lasche (56) verbindet.

3. Luftfahrzeug nach dem vorhergehenden Anspruch, derart dass jede Schwenkverbindung (54) zwei Laschen (56, 56') aufweist, die auf beiden Seiten des ersten und zweiten Querträgerabschnitts (48.1, 48.2) angeordnet sind.

4. Luftfahrzeug nach einem der Ansprüche 2 bis 3, derart, dass jeder der ersten und zweiten Querträgerabschnitte (48.1, 48.2) einen Steg (36.1) aufweist und dass jede Lasche (56, 56') gegen eine Seite des Stegs (36.1) der ersten und zweiten Querträgerabschnitte (48.1, 48.2) angesetzt ist.

5. Luftfahrzeug nach einem der vorhergehenden Ansprüche, derart, dass der erste Querträgerabschnitt (48.1) fest mit dem festen Bodenteil (44) verbunden ist, wobei der zweite Querträgerabschnitt (48.2) fest mit dem beweglichen Bodenteil (46) verbunden ist.

6. Luftfahrzeug nach einem der vorhergehenden Ansprüche, derart, dass jeder Querträger (36), der die Längskante (46.1, 46.2) des beweglichen Bodenteils (46) schneidet, in deren Bereich die Schwenkachse (A52) angeordnet ist, eine Schnittebene aufweist, die ungefähr an der Längskante (46.1, 46.2) angeordnet ist und den Querträger (36) in einen ersten und einen zweiten Querträgerabschnitt (48.1, 48.2) teilt, die durch eine Schwenkverbindung (54) verbunden sind.

7. Luftfahrzeug nach einem der vorhergehenden Ansprüche, derart, dass der bewegliche Bodenabschnitt (46) durch eine zur Längsrichtung parallele erste und zweite Längskante (46.1, 46.2) sowie durch eine erste vordere und eine zweite hintere Querkante (46.3, 46.4) begrenzt ist, die im rechten Winkel zur Längsrichtung verlaufen, wobei die vordere Querkante (46.3) in Bezug auf einen ersten Querträger (36A) etwas beabstandet und leicht nach vorne versetzt ist und die hintere Querkante (46.4) in Bezug auf einen zweiten Querträger (36B) etwas beabstandet und leicht nach hinten versetzt ist.

8. Luftfahrzeug nach dem vorhergehenden Anspruch, derart, dass der Boden eine erste linke und eine zweite rechte Seitenkante (30.1, 30.2) sowie einen ersten und einen zweiten beweglichen Bodenteil (46, 46') aufweist, wobei der erste bewegliche Bodenteil (46) eine linke Längskante (46.1), die an der linken Seitenkante (30.1) des Bodens (30) angeordnet ist, und eine rechte Längskante (46.2) aufweist, die in Bezug auf eine erste Schiene (38A) etwas beabstandet und leicht nach links versetzt ist, und wobei der zweite bewegliche Bodenteil (46') eine rechte Längskante (46.2), die an der rechten Seitenkante (30.2) des Bodens (30) angeordnet ist, und eine linke Längskante (46.1) aufweist, die in Bezug auf eine zweite Schiene etwas beabstandet und leicht nach rechts versetzt ist.

9. Luftfahrzeug nach einem der vorhergehenden Ansprüche, wobei das Luftfahrzeug einen zentralen Flügelkasten (20) und einen Hauptfahrwerksschacht (26) aufweist, derart, dass der bewegliche Bodenteil (46) über dem zentralen Flügelkasten (20) und/oder dem Hauptfahrwerksschacht (26) angeordnet ist.

## Claims

1. Aircraft comprising a floor comprising several beams (36) parallel to each other and perpendicular to a longitudinal direction, several rails (38) parallel to each other and to the longitudinal direction, at least one fixed floor part (44) and at least one movable floor part (46) that is movable relative to the fixed floor part (44), having at least one longitudinal edge (46.1, 46.2) parallel to the longitudinal direction; the aircraft comprising a load-bearing structure (42) supporting the floor (30); the aircraft being such that at least two of said beams (36) each comprise a first beam portion (48.1) secured to a first element chosen from the fixed floor part (44) and the movable floor part (46) and a second beam portion (48.2) secured to a second element, chosen from the fixed floor part (44) and the movable floor part (46), different from the first element, the first and second beam portions (48.1, 48.2) being aligned, positioned end to end and separated at a cutting plane positioned approximately in line with the longitudinal edge (46.1, 46.2), such that at least one of said rails (38) comprises at least one first rail portion (50.1) secured to the movable floor part (46) and at least one second rail portion (50.2) secured to the fixed floor part (44) of the floor, extending said first rail portion (50.1), and such that the floor comprises at least one hinge (52) connecting the movable floor part (46) and the fixed floor part (44) and having a pivot axis (A52) parallel to the longitudinal direction, said hinge (52) comprising, for at least said two beams, a pivot link (54) which connects the first and second beam portions (48.1, 48.2), the beams (36) of the floor (30) resting on the load-bearing structure (42) in the region of each movable floor part (46), the beams (36) of the floor (30) being fastened to the load-bearing structure (42) in the region of each fixed floor part (44).

2. Aircraft as claimed in the preceding claim, such that each pivot link (54) comprises:
- at least one joint plate (56), connecting the first and second beam portions (48.1, 48.2), which has a first end (56.1) pressed against the first beam portion (48.1) and a second end (56.2) pressed against the second beam portion (48.2),
- a pivot pin (58), coincident with the pivot axis (A52) of the hinge (52), which passes through the first beam portion (48.1) and the first end (56.1) of the joint plate (56),
- at least one complete link (60) which connects the second beam portion (48.2) and the second end (56.2) of the joint plate (56).

3. Aircraft as claimed in the preceding claim, such that each pivot link (54) comprises two joint plates (56, 56') arranged to either side of the first and second beam portions (48.1, 48.2).

4. Aircraft as claimed in one of claims 2 to 3, such that each of the first and second beam portions (48.1, 48.2) has a web (36.1) and in that each joint plate (56, 56') is pressed against a face of the web (36.1) of each of the first and second beam portions (48.1, 48.2).

5. Aircraft as claimed in one of the preceding claims, such that the first beam portion (48.1) is secured to the fixed floor part (44), the second beam portion (48.2) being secured to the movable floor part (46).

6. Aircraft as claimed in one of the preceding claims, such that each beam (36) intersecting with the longitudinal edge (46.1, 46.2) of the movable floor part (46) at which the pivot axis (A52) is positioned, comprises a cutting plane, positioned approximately at the longitudinal edge (46.1, 46.2), dividing the beam (36) into first and second beam portions (48.1, 48.2) connected by a pivot link (54).

7. Aircraft as claimed in one of the preceding claims, such that the movable floor part (46) is delimited by first and second longitudinal edges (46.1, 46.2) parallel to the longitudinal direction and by first and second front and rear transverse edges (46.3, 46.4) perpendicular to the longitudinal direction, the front transverse edge (46.3) being closely spaced apart from and offset slightly towards the front in relation to a first beam (36A), the rear transverse edge (46.4) being closely spaced apart from and offset slightly towards the rear in relation to a second beam (36B).

8. Aircraft as claimed in the preceding claim, such that the floor comprises first and second right- and left-hand lateral edges (30.1, 30.2) and first and second movable floor parts (46, 46'), the first movable floor part (46) comprising a left-hand longitudinal edge (46.1) positioned at the left-hand lateral edge (30.1) of the floor (30) and a right-hand longitudinal edge (46.2) closely spaced apart from and offset slightly towards the left in relation to a first rail (38A), the second movable floor part (46') comprising a right-hand longitudinal edge (46.2) positioned at the right-hand lateral edge (30.2) of the floor (30) and a left-hand longitudinal edge (46.1) closely spaced apart from and offset slightly towards the right in relation to a second rail.

9. Aircraft as claimed in one of the preceding claims, said aircraft comprising a central wing box (20) and a main landing gear casing (26), such that the movable floor part (46) is positioned above the central wing box (20) and/or the main landing gear casing (26).
